Europäisches Patentamt

European Patent Office

Office européen des brevets

(19)

(11) Veröffentlichungsnummer : **0 089 669**
**B1**

(12) **EUROPÄISCHE PATENTSCHRIFT**

(45) Veröffentlichungstag der Patentschrift :
**05.03.86**

(21) Anmeldenummer : **83102797.4**

(22) Anmeldetag : **21.03.83**

(51) Int. Cl.⁴ : **C 01 B 31/02**, C 04 B 35/52,
D 01 F 9/20

(54) **Verfahren zum Herstellen von Glaskohlenstoff.**

(30) Priorität : **24.03.82 DE 3210878**

(43) Veröffentlichungstag der Anmeldung :
**28.09.83 Patentblatt 83/39**

(45) Bekanntmachung des Hinweises auf die Patenterteilung : **05.03.86 Patentblatt 86/10**

(84) Benannte Vertragsstaaten :
**AT BE CH DE FR GB LI LU NL SE**

(56) Entgegenhaltungen :
**US-A- 4 110 515**
**KUNSTSTOFFE, Jahrgang 71, Heft 6, Juni 1981, Sei-**
**ten 386-388, München, DE. F. QUELLA: "Thermisch-**
**oxidativer Abbau von Polyphenylensulfid bei Einsatz-**
**und Verarbeitungstemperatur"**

(73) Patentinhaber : **Siemens Aktiengesellschaft**
**Berlin und München Wittelsbacherplatz 2**
**D-8000 München 2 (DE)**

(72) Erfinder : **Quella, Ferdinand, Dr.**
**Parkstrasse 9**
**D-8035 Gauting (DE)**
Erfinder : **Schmidt, Hans-Friedrich, Dr.**
**Graf-Tattenbach-Weg 2**
**D-8196 Eurasburg (DE)**

## Beschreibung

Die vorliegende Patentanmeldung betrifft ein Verfahren zum Herstellen von Glaskohlenstoff durch thermischen Abbau von Polyphenylen-Kunststoffen.

Glaskohlenstoff wird aus verschiedenen Kunststoffen wie zum Beispiel Polyacrylnitril oder Polyfurfurylalkohol durch einen komplizierten Abbauprozeß (Verkohlungsprozeß) unter Luft und Stickstoff bei stetig steigender Temperatur hergestellt. Der Kunststoff wird dazu zunächst in eine entsprechende Form, zum Beispiel Faser, Platte oder Formstück gebracht und dann thermisch so weit abgebaut, daß der Kunststoff weitgehend in Kohlenstoff, den Glaskohlenstoff, umgewandelt wird. Der Kunststoff darf dabei in der Anfangsphase nicht über die Schmelztemperatur erwärmt werden, da er sonst seine Form verliert.

Aus der US-A-4 110-515 ist ein Verfahren zum Herstellen von Glaskohlenstoff aus Polyphenylen-Kunststoffen bekannt, bei dem der Glaskohlenstoff in Verbindung mit einem Graphitfilz als Elektroden in einer Sekundär-Batterie oder Sammler-Zelle verwendet wird. Die Umwandlung in Glaskohlenstoff erfolgt dabei bei Temperaturen größer 800 °C.

Aufgabe der vorliegenden Erfindung ist es, ein Verfahren zum Herstellen von Glaskohlenstoff zu finden, bei dem ein Polyphenylen-Kunststoff verwendet wird, dessen thermischer Abbau so geführt werden kann, daß keine Formveränderung stattfindet.

Diese Aufgabe wird durch ein Verfahren der eingangs genannten Art dadurch gelöst, daß Polyphenylensulfid oder dessen Substitutionsverbindungen verwendet werden, daß als Beschleuniger beim thermischen Abbau Oxide sulfidbildender Metalle zugesetzt werden, und daß der thermische Abbau bei Temperaturen größer 150 °C durchgeführt wird, wobei die Temperatur während des Abbaus bis nahezu Schmelztemperatur erhöht wird.

Der Kunststoff Polyphenylensulfid (ein thermoplastisches Polykondensat mit der allgemeinen Formel $(-C_6H_4-S-)_n$) eignet sich aufgrund seiner chemischen Struktur besonders für die Herstellung von Glaskohlenstoff. Der Abbau dieses Kunststoffes erfolgt jedoch bis zur Schmelztemperatur von 285 °C so langsam, daß ein Abbau unter normalen Bedingungen (Luft, Normaldruck) nicht geeignet ist. Eine Temperaturerhöhung über die Schmelztemperatur führt zu einer Verformung. Hinweise über den Mechanismus des thermischen Abbaus von Polyphenylensulfid an Luft sind aus einem Aufsatz von F. Quella in « Kunststoffe » 71 (1981) auf den Seiten 386 bis 388 zu entnehmen.

Während einige Zusatzstoffe wie Polyvinylcarbazol den Abbau in diesem Temperaturbereich verzögern, einige Salze wie Lithiumcarbonat oder Natriumcarbonat sich indifferent verhalten (Lithiumcarbonat wird in der Arbeit von Quella als Adsorbens verwendet), wurde durch das Verfahren nach der Lehre der Erfindung festgestellt, daß Metalloxide, insbesondere von silfidbildenden Metallen, den Abbau wesentlich beschleunigen. Bereits bei einer Abbautemperatur von 200 °C beschleunigen z. B. 1 % $Fe_2O_3$ die Abbaugeschwindigkeit um den Faktor 2 (gemessen über die Entwicklung schwefelhaltiger Ausgasungen in einem Schwefelgasdetektor). Während die Entwicklung schwefelhaltiger Gase mit der Konzentration an zugesetztem $Fe_2O_3$ ständig zunimmt, ist bei einem Zusatz von $Al_2O_3$ (basisch) eine gegenläufige Tendenz zu beobachten. 0,1 % zugesetztes $Al_2O_3$ bewirken eine Beschleunigung des Abbaus bei 200 °C um den Faktor 1,5 ; bei 1 % Zusatz ist fast keine Beschleunigung feststellbar.

Der gefundene Effekt bei $Fe_2O_3$ läßt sich für die Herstellung von Glaskohlenstoff sehr gut nutzen. Erhöht man die Abbautemperatur auf ca. 280 °C, also knapp unterhalb der Schmelztemperatur von 285 °C, und die $Fe_2O_3$-Konzentration auf ca. 10 % oder mehr, so läßt sich die Abbaugeschwindigkeit bei einer annähernden Gültigkeit des Arrhenius-Gesetzes um mehrere Zehnerpotenzen steigern. Durch die zunehmende Vernetzung kann die Abbautemperatur langsam gesteigert werden, also auch weit über die ehemalige Schmelztemperatur von 280 °C hinaus, ohne daß eine Verformung eintritt.

Die Zusätze sind z. B. für elektrische Einsatzzwecke kaum von Belang, da es dabei hauptsächlich auf die Oberfläche ankommt. Die mechanischen Eigenschaften ändern sich auch erst bei größeren Metalloxid-Zusatzmengen, z. B. Versprödung bei der Herstellung von Fasern. Bei Gefäßen sind Auswaschungen von $Fe_2O_3$ in vielen Fällen nicht störend. Außerden kann man dabei auf den Einsatz von $Al_2O_3$ zurückkommen, wenn auch bei diesem Zusatz die Beschleunigung des Abbaues nicht so stark ist wie bei $Fe_2O_3$.

Es liegt im Rahmen der Erfindung neben Eisenoxid (insbesondere $Fe_2O_3$) und Aluminiumoxid (basisches $Al_2O_3$) auch die Oxide von Zink, Mangan, Silber, Kupfer, Vanadin oder Chrom zu verwenden, wobei die beschleunigenden Eigenschaften nicht so stark ausgeprägt sind wie bei $Fe_2O_3$. Andere Oxide wie die von Blei, Cadmium oder Nickel würden auch als Beschleuniger wirken, scheiden jedoch aus toxikologischen Gründen aus. Oxide von Bor und Phosphor sind wegen ihrer sehr leichten Löslichkeit nicht geeignet.

Alkali- und Erdalkalioxide wirken auch beschleunigend auf den Abbau von Polyphenylensulfid, sind jedoch leicht löslich. Von Vorteil für die Erfindung ist dieser Effekt, wenn Elektroden mit poröser, also großer Oberfläche aus nach dem erfindungsgemäßen Verfahren hergestellten Glaskohlenstoff gefertigt werden, weil man dann diese Alkali- oder Edalkaliionen wieder herauslösen kann.

Üblicherweise schrumpfen Teile, die aus Kunststoffen in Glaskohlenstoff umgewandelt werden, sehr stark. Diesem Effekt läßt sich entgegenwirken, wenn man gemäß einem Ausführungsbeispiel nach der Lehre der Erfindung eine geringe Menge (ca. 1 %) eines anorganischen Salzes, z. B. Hydrogen- bzw. Bicarbonate von Alkali- oder Erdalkalimetallen, zusetzt. Dieser Stoff spaltet beim Erwärmen $CO_2$ ab, das dem Schrumpfen entgegenwirkt. Die Reaktion kann dann so geführt werden, daß der Kunststoff zunächst einige Zeit bei steigender Temperatur verkohlt wird und wenn er sich verfestigt hat (Vernetzung), die Temperatur auf die Zerfallstemperatur des anorganischen Carbonates (z. B. zwischen 300 bis 400 °C) angehoben wird. Je nach Zeitdauer und nach vorhandener Viskosität schäumt der Zusatz dann auf.

**Patentansprüche**

1. Verfahren zum Herstellen von Glaskohlenstoff durch thermischen Abbau von Polyphenylen-Kunststoffen, dadurch gekennzeichnet, daß Polyphenylensulfid oder dessen Substitutionsverbindungen verwendet werden, daß als Beschleuniger beim thermischen Abbau Oxide sulfidbildender Metalle zugesetzt werden und daß der thermische Abbau bei Temperaturen größer 150 °C durchgeführt wird, wobei die Temperatur während des Abbaus bis nahezu Schmelztemperatur erhöht wird.

2. Verfahren nach Anspruch 1, dadurch gekennzeichnet, daß die Temperatur bei Beginn der Reaktion auf etwa 200 °C eingestellt und im Verlauf der Reaktion relativ schnell bis auf 280 °C erhöht wird und mit der Erhöhung der Schmelztemperatur stetig gesteigert wird.

3. Verfahren nach Anspruch 1 und 2, dadurch gekennzeichnet, daß Oxide von Eisen, Zink, Mangan, Aluminium, Silber, Kupfer, Chrom und Vanadin verwendet werden.

4. Verfahren nach Anspruch 3, dadurch gekennzeichnet, daß Eisentrioxid ($Fe_2O_3$) von mindestens 1 % Massenanteil, vorzugsweise 10 % Massenanteil, zugesetzt wird.

5. Verfahren nach Anspruch 3, dadurch gekennzeichnet, daß basisches Aluminiumoxid ($Al_2O_3$) in einem Massenanteil von maximal 0,5 %, insbesondere 0,1 %, zugesetzt wird.

6. Verfahren nach Anspruch 1 und 2, dadurch gekennzeichnet, daß Alkali- oder Erdalkalioxide verwendet werden in einem Massenanteil im Bereich von 1 bis 10 %.

7. Verfahren nach mindestens einem der Ansprüche 1 bis 6, dadurch gekennzeichnet, daß zusätzlich ein thermisch spaltbares, anorganisches Salz in einem Massenanteil im Bereich von 1 % beigemischt wird.

8. Verfahren nach Anspruch 7, dadurch gekennzeichnet, daß Bicarbonate der Alkali- oder Erdalkalimetalle verwendet werden.

**Claims**

1. A method of producing vitreous carbon by thermally decomposing polyphenylene resins, characterised in that polyphenylene sulphide or substitution compounds thereof are used ; that during the thermal decomposition, oxides of sulphide-forming metals are added as accelerators ; and that the thermal decomposition is carried out at temperatures above 150 °C, the temperature during the decomposition being increased to close to the melting point.

2. A method as claimed in Claim 1, characterised in that at the beginning of the reaction, the temperature is adjusted to about 200 °C and during the course of the reaction it is relatively rapidly increased to 280 °C and constantly increased with the raising of the melting point.

3. A method as claimed in Claim 1 and Claim 2, characterised in that oxides of iron, zinc, manganese, aluminium, silver, copper, chromium and vanadium are used.

4. A method as claimed in Claim 3, characterised in that ferric oxide ($Fe_2O_3$) is added in a percentage by volume of at least 1 %, preferably 10 %.

5. A method as claimed in Claim 3, characterised in that basic aluminium oxide ($Al_2O_3$) is added in a percentage by volume of at most 0.5 %, in particular 0.1 %.

6. A method as claimed in Claim 1 and 2, characterised in that alkali metal or alkaline earth metal oxides are used in a percentage by volume in the range of 1 to 10 %.

7. A method as claimed in at least one of Claims 1 to 6, characterised in that a thermally-cleavable inorganic salt is used in a percentage by volume in the region of 1 %.

8. A method as claimed in Claim 7, characterised in that bicarbonates of the alkali metals or alkaline earth metals are used.

**Revendications**

1. Procédé de préparation de carbone vitreux par décomposition thermique de matières plastiques en polyphénylène, caractérisé en ce qu'il consiste à utiliser du poly(sulfure de phénylène) ou ses composés de substitution, à ajouter, comme accélérateur, lors de la décomposition thermique, des oxydes de métaux formant des sulfures et à effectuer la décomposition thermique à des températures supérieures à 150 °C, la température étant élevée jusqu'au voisinage de la température de fusion pendant la décomposition.

2. Procédé suivant la revendication 1, caractérisé en ce qu'il consiste à régler la température au début de la réaction à 200 °C environ et à l'élever relativement rapidement jusqu'à 280 °C au cours de la réaction et à l'élever constamment au fur et à mesure que s'élève la température de fusion.

3. Procédé suivant les revendications 1 ou 2, caractérisé en ce qu'il consiste à utiliser des oxydes de fer, de zinc, de manganèse, d'aluminium, d'argent, de cuivre, de chrome et de vanadium.

4. Procédé suivant la revendication 3, caractérisé en ce qu'il consiste à ajouter du trioxyde de fer ($Fe_2O_3$) en une proportion massique d'au moins 1 % et de préférence en une proportion massique de 10 %.

5. Procédé suivant la revendication 3, caractérisé en ce qu'il consiste à ajouter de l'oxyde d'aluminium basique ($Al_2O_3$) en une proportion massique de 0,5 % au maximum et notamment de 0,1 %.

6. Procédé suivant les revendications 1 et 2, caractérisé en ce qu'il consiste à utiliser des oxydes de métaux alcalins ou de métaux alcalino-terreux en une proportion massique de l'ordre de 1 à 10 %.

7. Procédé suivant l'une au moins des revendications 1 à 6, caractérisé en ce qu'il consiste à ajouter en plus un sel minéral pouvant être décomposé thermiquement en une proportion massique de l'ordre de 1 %.

8. Procédé suivant la revendication 7, caractérisé en ce qu'il consiste à utiliser des bicarbonates des métaux alcalins ou alcalino-terreux.